(19) Europäisches Patentamt
European Patent Office
Office européen des brevets

(11) Numéro de publication: **0 022 561**
**B1**

(12) # FASCICULE DE BREVET EUROPEEN

(45) Date de publication du fascicule du brevet: **06.07.83**

(51) Int. Cl.³: **H 04 Q 3/00,**
H 04 M 19/00, H 04 B 1/58.

(21) Numéro de dépôt: **80103947.0**

(22) Date de dépôt: **10.07.80**

(54) **Dispositif d'alimentation d'un poste d'abonné.**

(30) Priorité: **17.07.79 FR 7918450**

(43) Date de publication de la demande:
**21.01.81 Bulletin 81/3**

(45) Mention de la délivrance du brevet:
**06.07.83 Bulletin 83/27**

(84) Etats contractants désignés:
**BE CH DE FR GB IT LI NL SE**

(56) Documents cités:
**FR - A - 2 053 924**
**FR - A - 2 350 018**
**FR - A - 2 355 423**
**US - A - 4 103 112**

(73) Titulaire: **COMPAGNIE INDUSTRIELLE DES TELECOMMUNICATIONS CIT-ALCATEL S.A. dite:**
**12, rue de la Baume**
**F-75008 Paris (FR)**

(72) Inventeur: **Bars, Gérard**
**2, Allée des Loriots**
**F-22670 Pleumeur Bodou (FR)**

(74) Mandataire: **Weinmiller, Jürgen et al,**
**Zeppelinstrasse 63**
**D-8000 München 80 (DE)**

**EP 0 022 561 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Dispositif d'alimentation d'un poste d'abonné

L'invention concerne l'alimentation d'un poste d'abonné à travers un transformateur d'isolement galvanique. Les dispositifs d'alimentation des postes d'abonnés possédant un transformateur pour réaliser l'isolement galvanique présentent en général trois inconvénients majeurs: le courant continu traversant un pont constitué par les demi-enroulements secondaires reliés au poste d'abonné par la ligne d'abonné, il est donc nécessaire soit de dimensionner le transformateur en fonction de ce courant continu, ce qui conduit à un encombrement très important, soit de compenser ce courant continu à l'aide d'un enroulement supplémentaire, ce qui conduit à des montages relativement sophistiqués et à une consommation supplémentaire; un condensateur entre les demi enroulements secondaires est nécessaire pour découpler le pont d'alimentation continue; du fait de la présence de ce condensateur et de la valeur de l'inductance du transformateur (inférieure à 1 henry en général) l'affaiblissement des basses fréquences de la bande téléphonique n'est pas négligeable (entre 0,5 et 1dB à 300 Hz).

L'invention a pour but de remédier à ces inconvénients.

On connaît par le document US—A—103 112 un dispositif du type indiqué ci-dessus, et dans lequel la compensation du courant continu dans un enroulement secondaire du transformateur est effectuée par un enroulement supplémentaire alimenté par un circuit de mesure et un circuit de régulation, le circuit de mesure délivrant une tension proportionnelle à la somme des tensions aux bornes des deux résistances en série dans la ligne d'abonné.

On connaît également, par le document FR—A—2 350 018, un dispositif à transformateur muni d'un enroulement de compensation. Un circuit de mesure délivre une tension proportionnelle au courant dans la ligne d'abonné, tension qui est utilisée pour commander le courant circulant dans l'enroulement de compensation.

On connaît d'autre part, par le document FR—A—2 355 423, un équipement de ligne d'abonné comportant un circuit de réception, un circuit d'émission et un transformateur sans enroulement de compensation. Les circuits de réception et d'émission sont constitués chacun par un amplificateur différentiel. Le courant dans la ligne d'abonné est obtenu à partir d'un générateur d'impulsions rectangulaires pilotant un premier transistor en série avec le primaire du transformateur. Une source de tension continue alimente, à travers un deuxième transistor et une résistance, l'ensemble premier transistor-primaire du transformateur. Le circuit de réception commande le deuxième transistor, et le circuit d'émission est connecté aux bornes de la résistance. Un réseau antilocal est prévu sur le circuit d'émission pour que les variations de tension à la sortie du circuit de réception n'agissent pas sur le circuit d'émission. La valeur de la résistance a été choisie de manière que l'impédance vue de ligne soit de 600 ohms; le réseau antilocal, qui est connecté aux bornes de ladite résistance, est donc déterminé en fonction de la valeur de cette résistance. Il n'est pas mentionné qu'on puisse régler l'impédance vue de la ligne de manière à l'adapter à l'impédance présentée par la ligne et le poste d'abonné.

L'invention a donc pour objet un dispositif d'alimentation d'un poste d'abonné comportant un transformateur d'isolement galvanique ayant un rapport de transformation de 1/n, un circuit de mesure du courant dans la ligne d'abonné, un circuit de réception des signaux de parole à destination du poste d'abonné relié en entrée à une borne de réception et en sortie à une extrémité d'un enroulement primaire du transformateur dont une autre extrémité est reliée à un potentiel fixe, et un circuit d'émission des signaux de parole provenant du poste d'abonné, relié en sortie à une borne d'émission, le transformateur ayant un enroulement secondaire constitué par deux demi-enroulements secondaires, chaque demi-enroulement secondaire étant en série avec une résistance et constituant respectivement un premier et un second circuits, le premier circuit étant relié à une polarité d'une source de courant continu et à un fil de la ligne d'abonné, le second circuit étant relié à l'autre polarité de ladite source de courant continu et à l'autre fil de la ligne d'abonné, le circuit de mesure étant relié en entrée aux bornes de la résistance de chacun desdits premier et second circuits et délivrant par rapport audit potentiel fixe une tension proportionnelle à la somme des tensions aux bornes des résistances des premier et second circuits, caractérisé par le fait que le circuit de réception est un premier additionneur ayant une entrée positive reliée audit potentiel fixe, et une entrée négative reliée à la borne de réception par une première résistance, à la sortie du premier additionneur par une deuxième résistance et à la sortie du circuit de mesure par un circuit de réglage d'impédance et un condensateur en série, le circuit de réglage d'impédance étant constitué par une résistance et permettant d'adapter l'impédance du dispositif d'alimentation à l'impédance présentée par la ligne et le poste d'abonné, que le circuit d'émission est constitué par un second additionneur ayant une entrée positive reliée au potentiel fixe et une entrée négative reliée à la sortie du second additionneur par une troisième résistance, à un point commun au condensateur et au circuit de réglage d'impédance par une quatrième résistance et à la borne de réception par un circuit d'équilibrage constitué par une résistance, le circuit d'équilibrage permettant d'annuler le signal de sortie du circuit d'émission en l'absence d'émission par le poste d'abonné, la résistance du circuit de réglage d'impédance ayant une valeur R3 donnée par l'équation:

$$R3=\frac{1}{n}.K.R4.\frac{R}{Ro-R};$$

et la résistance du circuit d'équilibrage ayant une valeur R6 donnée par l'équation:

$$R6=2n.R7.\frac{Ro}{R}.\frac{1}{K}.\frac{R5}{R4};$$

équations dans lesquelles K est le facteur de proportionnalité du circuit de mesure, 1/n est le rapport de transformation du transformateur, R4 est la valeur de la deuxième résistance, R5 est la valeur de la première résistance, R7 est la valeur de la quatrième résistance, Ro est la valeur de la résistance de ligne et du poste d'abonné, et R est la valeur de la somme des deux résistances des premier et second circuits.

L'invention va être décrite à l'aide d'exemples de réalisation illustrés par les figures annexées dans lesquelles:

— la figure 1 est un schéma d'un dispositif d'alimentation selon l'invention,
— la figure 2 représente un exemple de réalisation d'un dispositif d'alimentation conforme à la figure 1.

La figure 1 représente un schéma d'un dispositif d'alimentation objet de l'invention. Dans cette figure T est un transformateur, 1 un dispositif de réception et d'adaptation d'impédance, 12 un dispositif d'émission, 35 un circuit de détection de boucle, 5 une résistance de valeur R reliée à une borne 3, et 2 un poste d'abonné relié par une ligne d'abonné L à la borne 3; l'impédance de la ligne d'abonné L et du poste d'abonné 2, vue de la borne 3 est représentée par une résistance 13 de valeur Ro.

Le dispositif de réception et d'adaptation d'impédance 1 comprend un circuit de mesure 4, un circuit de réglage d'impédance 6 et un circuit de réception 7. Le dispositif d'émission 12 comprend un circuit d'émission 9 et un circuit d'équilibrage 8.

Le transformateur T a un enroulement primaire P dont une extrémité est reliée à la masse et une autre extrémité est reliée à la sortie du circuit de réception 7, et un enroulement secondaire E dont une extrémité est reliée à la résistance 5 et une autre extrémité est reliée à la masse à travers une source de courant continu S; on supposera, dans cette figure, que le rapport de transformation du transformateur T est égal à 1. Le circuit de mesure 4 est relié en entrée aux bornes de la résistance 5, et sa sortie est reliée à une entrée du circuit de réception 7 par le circuit de réglage d'impédance 6. Une autre entrée du circuit de réception est reliée à une borne de réception 10. La sortie du circuit de mesure 4 est également reliée à une entrée du circuit d'émission 9 dont la sortie est reliée à une borne d'émission 11; le circuit d'équilibrage 8 est relié en entrée à la borne de réception 10 et en sortie à une autre entrée du circuit d'émission 9. On désignera par VL la tension à la borne 3, par I le courant dans la résistance 5, par VS la tension en sortie du circuit de réception 7, par V la tension à la sortie du circuit de mesure 4, par VR la tension à la borne de réception 10, par Va la tension au poste d'abonné à l'émission, et par VE la tension à la borne d'émission 11. Le circuit de détection de boucle 35 est relié à la sortie du circuit de mesure 4. La tension V en sortie du circuit de mesure 4 est V=RI. Le circuit de réglage d'impédance 6 délivre en sortie une tension K1 RI, le circuit d'équilibrage 8 délivre en sortie une tension K2 VR. Les circuits de réception et d'émission sont des additionneurs qui effectuent la somme des signaux qui leurs sont appliqués; la tension de sortie des circuits de réception 7 est VS=VR+K1 . RI; la tension en sortie du circuit d'émission 9 est VE=VR . K2+RI.

Pour que le dispositif d'alimentation soit adapté à la ligne L et au poste d'abonné 2, il faut que son impédance d'entrée soit

$$\frac{VL}{I}=Ro,$$

pour VR=o. Le courant I est alors égal à

$$I=\frac{VL-VS}{R}=\frac{VL-K1.RI}{R};$$

pour que l'impédance d'entrée soit égale à Ro, il faut que:

$$K1=\frac{Ro-R}{R} \qquad (1)$$

— A l'émission, la tension VE délivrée par le circuit d'émission 9, pour VR=o, est VE=RI. On a VL=Va—RoI=RoI, lorsque l'impédance d'entrée est égale à Ro, d'où Va=2 Ro I. Il vient alors

$$VE=\frac{R\,.\,Va}{2\,Ro}$$

$$\text{d'où}\ \frac{2\,VE}{Va}=\frac{R}{Ro} \qquad (2)$$

— A la réception on a, pour Va=o

$$VL=\frac{Ro}{R+Ro}\,.\,VS=\frac{Ro}{R+Ro}\,[VR+(Ro-R)\,I]$$

$$\text{et}\ I=-\frac{VL}{Ro}$$

on en déduit:

$$\frac{2\,VL}{VR}=1 \qquad (3)$$

Ce résultat montre qu'à la réception le dispositif d'alimentation se comporte comme un générateur de force électromotrice VR et d'impédance de sortie Ro.

— L'équilibrage du dispositif d'alimentation consiste à avoir VE=o lorsque Va=o, c'est à dire en l'absence d'émission. Pour cela il faut que K2 . VR+RI=o. De l'équation (3) on déduit que

$$VL=\frac{VR}{2},$$

le courant à la réception étant

$$I=-\frac{VL}{Ro}.$$

Il vient alors

$$K2\,.\,VR-\frac{R\,.\,VR}{2\,Ro}=o$$

d'où:

$$K2=\frac{R}{2\,Ro} \qquad (4)$$

Les résultats précédents montrent que, sous réserve que les conditions données par les équations (1) et (4) soient remplies et que VS=VR+K1 RI, quelle que soit la fréquece:

— l'impédance, d'entrée est égale à Ro,
— dans le sens émission le gain est égal à

$$\frac{R}{Ro},$$

— dans le sens réception le gain est égal à 0,5,
— l'équilibrage est parfaitement réalisé pour une impédance de ligne Ro.

Enfin, dans la mesure où le circuit de mesure 4 passe le courant continu, il est possible d'uliliser sa tension de sortie V=RI pour effectuer la détection de boucle (signalisation de décrochage et de raccrochage du poste d'abonné).

La figure 2 montre un exemple de réalisation d'un dispositif d'alimentation conforme au schéma de la figure 1. Deux bornes A et B sont reliées au poste d'abonné par la ligne d'abonné. La borne A est reliée à la polarité positive d'une source continue S,à travers une résistance 14 et un demi-enroulement secondaire E1; la borne B est reliée à la polarité négative de la source continue à travers une résistance 15 et un demi-enroulement secondaire E2; les résistances 14 et 15 ont même valeur R/2, R désignant la valeur de la résistance 5, de la figure 1. La borne A est reliée à un point commun à la résistance 15 et au demi-enroulement E2 par deux résistances 16 et 17 en série dont le point commun est relié à une entrée négative d'un amplificateur opérationnel 18; la borne B est reliée à un point commun à la résistance 14 et au demi-enroulement E1 par deux résistances 19, 20 en série dont le point commun est relié à une entrée positive de l'amplificateur opérationnel 18. On notera que les quatre résistances 16, 17, 19, 20 sont identiques et ont même valeur R1. La sortie de l'amplificateur opérationnel 18 est reliée par une résistance 21 à son entrée négative; l'entrée positive de l'amplificateur opérationnel 18 est reliée à la masse par une résistance 22, identique à celle reliant la sortie à l'entrée négative, les résistances 21 et 22 ayant chacune une valeur R2. La sortie de l'amplificateur opérationnel 18 est reliée, à travers un condensateur C1, d'une part, à travers une résistance 23 de valeur R3 à une entrée négative d'un amplificateur opérationnel 24, et d'autre part, à travers une résistance 25 de valeur R7 à une entrée négative d'un amplificateur opérationnel 26. La borne de réception 10 est reliée, d'une part à l'entrée négative de l'amplificateur opérationnel 24 par une résistance 27 de valeur R5 et d'autre part à l'entrée négative de l'amplificateur opérationnel 26 par une résistance 28 de valeur R6. L'entrée positive de chacun des amplificateurs opérationnels 24 et 26 est reliée à la masse. La sortie de l'amplificateur opérationnel 24 est reliée d'une part à son entrée négative par une résistance 29 de valeur R4 et d'autre part à la masse par un enroulement primaire P. L'enroulement primaire P et les demi-enroulements secondaires E1 et E2 sont ceux du transformateur T dont le rapport entre le nombre de spires du secondaire, constitué par les demi-enroulements secondaires E1 et E2, et le nombre de spires du primaire P est

$$\frac{1}{n}.$$

En désignant par V2 la tension aux bornes du secondaire, chaque demi-enroulement secondaire E1, E2 a une tension V2/2=VS/2n à ses bornes. L'amplificateur opérationnel 26 a sa sortie reliée d'une part à la borne d'émission 11 et d'autre part à son entrée négative par une résistance 30 de valeur R8.

Le circuit de détection de boucle 35 comporte un amplificateur opérationnel 31 dont l'entrée positive est reliée d'une part à la masse par un condensateur C2 et d'autre part à la sortie de l'amplificateur opérationnel 18 par une résistance 32 de valeur R9. L'entrée négative de l'amplificateur opérationnel 31 est reliée d'une part à la masse par une résistance 33 de valeur R11, et d'autre part à une tension +U par une résistance 34 de valeur R10.

Les quatre amplificateurs opérationnels 18, 24, 26, 31 sont alimentés par des tensions +U et −U.

- Le circuit de mesure 4 de la figure 1 est constitué par les quatre résistances 16, 17, 19, 20, les deux résistances 21, 22 et l'amplificateur opérationnel 18.
- Le circuit de réception 7 de la figure 1 est constitué par les résistances 27 et 29 et l'amplificateur opérationnel 24.
- Le circuit d'émission 9 de la figure 1 est constitué par les résistances 25 et 30 et l'amplificateur opérationnel 26.
- Le circuit de réglage d'impédance 6 de la figure 1 est constitué par la résistance 23.
- Le circuit d'équilibrage 8 de la figure 1 est constitué par la résistance 28.

La tension V1 en sortie de l'amplificateur opérationnel 18 est:

$$|V1|=|RI|.\frac{R2}{2R1}=K.RI \qquad (5)$$

K étant un coefficient de proportionnalité du circuit de mesure et I étant le courant qui circule dans les résistances 14 et 15, ces résistances ayant chacune la valeur R/2.

La précision du seuil de détection de boucle, par le circuit de détection de boucle 35, dépend de la précision des résistances 16, 17, 19, 20, 21 et 22. Le réseau 32, C2 filtre la composante alternative de la tension V1. En désignant par Is le courant de seuil que l'on peut détecter on a:

$$RIs\frac{R2}{2R1}=U\frac{R11}{R10+R11}$$

soit:

$$Is=\frac{U}{R}\cdot\frac{2R1}{R2}\cdot\frac{R11}{R10+R11} \quad (6)$$

— La tension en sortie du circuit de réception 7 est VS; la tension aux bornes de chaque demi-enroulement secondaire E1, E2 est donc

$$\frac{VS}{2n},$$

et la tension V2 aux bornes de l'enroulement secondaires est la somme des tensions aux bornes des demi-enroulements secondaires; on a donc:

$$V2=\frac{|VS|}{n}=\frac{1}{n}(VR\frac{R4}{R5}+V1\frac{R4}{R3}) \quad (7)$$

Le courant I est égal à:

$$I=\frac{VL-V2}{R}$$

pour VR=o.
On veut que l'impédance d'entrée soit égale à Ro, donc:

$$I=\frac{VL}{Ro}=\frac{VL}{R}-\frac{V1}{nR}\ \frac{R4}{R3}$$

$$\text{avec } V1=RI\cdot\frac{R2}{2R1}=\frac{R\,VL}{Ro}\cdot\frac{R2}{2R1}$$

il vient:

$$\frac{1}{Ro}=\frac{1}{R}-\frac{1}{Ro}\cdot\frac{1}{n}\cdot\frac{R2}{2R1}\cdot\frac{R4}{R3}$$

d'où:

$$R3=\frac{1}{n}\cdot\frac{R2}{2R1}\cdot R4\cdot\frac{R}{Ro-R}=\frac{1}{n}\cdot K\cdot R4\cdot\frac{R}{Ro-R} \quad (8)$$

La résistance 23, de valeur R3, permet de régler l'impédance d'entrée à la valeur de l'impédance de chacun des postes d'abonnés.

— A la réception on a, pour Va=o.

$$VL=\frac{Ro}{R+Ro}\cdot V2 \text{ et } I=-\frac{VL}{Ro}$$

V2 étant donné par l'équation (7)
On en déduit:

$$\frac{2\,VL}{VR}=\frac{1}{n}\cdot\frac{R4}{R5} \qquad (9)$$

Cette équation 9 est à comparer à l'équation (3); la résistance 27, de valeur R5, permet de régler le gain dans le sens réception, donc d'avoir un gain supérieur à 1.

— A l'émission, donc pour VR=o, la tension délivrée par l'amplificateur opérationnel 26 est

$$VE=V1\cdot\frac{R8}{R7}$$

$$\text{soit } VE=RI\cdot\frac{R2}{2R1}\cdot\frac{R8}{R7}$$

L'impédance d'entrée étant égale à Ro, et Va étant la tension en sortie du poste d'abonné on a Va=2RoI.

On en déduit

$$\frac{2VE}{Va}=\frac{R}{Ro}\cdot\left(\frac{R8}{R7}\cdot\frac{R2}{2R1}\right) \qquad (10)$$

Cette équation est à comparer à l'équation (2); la résistance 25, de valeur R7, permet de régler le gain dans le sens émission, et d'avoir un gain supérieur à

$$\frac{R}{Ro}.$$

— La condition d'équilibrage, c'est-à-dire VE=o pour Va=o, se traduit par

$$VR\frac{R8}{R6}=-V1\cdot\frac{R8}{R7}=-RI\cdot\frac{R2}{2R1}\cdot\frac{R8}{R7}$$

Lorsque Va=o on a

$$I=-\frac{VL}{Ro},$$

puisqu'en réception le dispositif d'alimentation débite sur la ligne reliée aux bornes A et B, l'impédance vue des bornes A et B étant Ro.

On a donc, compte tenu de l'équation (9),

$$\frac{1}{R6}=+\frac{R}{Ro}\cdot\frac{1}{4n}\cdot\frac{R4}{R5}\cdot\frac{R2}{R1}\cdot\frac{1}{R7}$$

$$\text{soit } R6=4n\cdot R7\cdot\frac{Ro}{R}\cdot\frac{R1\cdot R5}{R4\cdot R2}=2n\cdot R7\cdot\frac{Ro}{R}\cdot\frac{1}{K}\cdot\frac{R5}{R4} \qquad (11)$$

La résistance 28, de valeur R6, permet donc de régler le circuit d'émission pour obtenir VE=o lorsque Va=o.

On va indiquer à présent comment calculer le transformateur T. Soit V2 max la tension de sortie maximum du transformateur, et i max le courant maximum que peut fournir l'amplificateur opérationnel 24; soit L2 l'inductance de l'enroulement secondaire (qui comprend les deux demi-enroulements secondaires E1 et E2) du transformateur T parcouru par le courant continu, et F min la plus basse fréquence à transmettre. La tension de sortie de l'amplificateur opérationnel 24 étant VS et en supposant que la résistance de l'enroulement primaire P est faible on a pratiquement

$$i=\frac{VS}{L1\omega},$$

i étant le courant de sortie de l'amplificateur opérationnel et L1 l'inductance de l'enroulement primaire. Avec le courant de sortie i max et la tension de sortie VS max correspondante on en déduit l'inductance L1 min correspondant à la fréquence basse F min.

$$L1\ min=\frac{VS\ max}{2\pi\ .\ F\ min.\ i\ max}$$

l'inductance secondaire correspondante est, n étant le rapport de transformation primaire/secondaire:

$$L2\ min=\frac{VS\ max}{n^2\ .\ 2\pi\ .\ F\ min.\ i\ max.}$$

$$soit:\ L2\ min=\frac{V2\ max}{n\ .\ 2\pi\ .\ F\ min.\ i\ max}$$

L2 min. est l'inductance secondaire correspondant à la fréquence basse F min à transmettre; elle est inversement proportionnelle au rapport de transformation n: on devra donc choisir n le plus grand possible pour avoir l'inductance L2 min. la plus faible possible; le transformateur est donc un transformateur abaisseur.

Avec V2 max=2 volts
 i max=10 milliampères
 F min=300 Hz
et en prenant n=4 on obtient:
 L2 min=26,5 millihenrys

Cette valeur est à comparer avec cells des inductances actuellement utilisées, de l'ordre de 600 millihenrys, soit un rapport de l'ordre 5 entre les ampères tours du courant continu.

Dans la figure 2, le condensateur C1 élimine la composante continue dans le signal de sortie de l'amplificateur opérationnel 18, et les constantes de temps R3, C1 et R7. C1 sont choisies suffisamment grandes pour ne pas entraîner de réduction de la bande passante.

Le dispositif d'alimentation de l'invention permet donc d'alimenter un poste d'abonné sans condensateur de découplage en ligne et avec un transformateur dont le nombre de spires de l'enroulement parcouru par le courant continu est diminué dans un rapport important, de l'ordre de 5, par rapport aux dispositifs actuellement utilisés. Son encombrement est donc réduit.

Le dispositif d'alimentation de l'invention présente également, par rapport aux dispositifs connus, les avantages suivants: bande passante sans ondulation, en particulier aux fréquences basses; dans le sens émission et dans le sens réception: impédance d'entrée constante dans toute la bande et ne présentant pas de termes imaginaires.

De plus le dispositif d'alimentation réalise directement le passage 2 fils 4 fils, et permet d'effectuer simplement la détection de boucle.

**Revendication**

Dispositif d'alimentation d'un poste d'abonné comportant un transformateur d'isolement galvanique (T) ayant un rapport de transformation de 1/n, un circuit de mesure (4) du courant (I) dans la ligne d'abonné, un circuit de réception (7) des signaux de parole à destination du poste d'abonné relié en entrée à une borne de réception (10) et en sortie à une extrémité d'un enroulement primaire du transformateur dont une autre extrémité est reliée à un potentiel fixe, et un circuit d'émission (9) des signaux de parole provenant du poste d'abonné, relié en sortie à une borne d'émission (11), le transformateur ayant un enroulement secondaire constitué par deux demi-enroulements secondaires (E1, E2), chaque demi-enroulement secondaire étant en série avec une résistance (14, 15) et constituant respectivement un premier et un second circuits, le premier circuit étant relié à une polarité d'une source de courant continu et à un fil de la ligne d'abonné, le second circuit étant relié à l'autre polarité de ladite source de courant continu et à l'autre fil de la ligne d'abonné, le circuit de mesure (4) étant relié en entrée aux bornes de la résistance de chacun desdits premier et second circuits et délivrant par rapport audit potentiel fixe une tension (V1) proportionnelle à la somme des tensions aux bornes des résistances des premier et second circuits, caractérisé par le fait que le circuit de réception est un

premier additionneur (24) ayant une entrée positive reliée audit potentiel fixe, et une entrée négative reliée à la borne de réception (10) par une première résistance (27), à la sortie du premier additionneur par une deuxième résistance (29) et à la sortie du circuit de mesure (4) par un circuit de réglage d'impédance (6) et un condensateur (C1) en série, le circuit de réglage d'impédance étant constitué par une résistance (23) et permettant d'adapter l'impédance du dispositif d'alimentation à l'impédance présentée par la ligne et le poste d'abonné, que le circuit d'émission (9) est constitué par un second additionneur (26) ayant une entrée positive reliée au potentiel fixe et une entrée négative reliée à la sortie du second additionneur par une troisième résistance (30), à un point commun au condensateur (C1) et au circuit de réglage d'impédance (6) par une quatrième résistance (25) et à la borne de réception (10) par un circuit d'équilibrage (8) constitué par une résistance (28), le circuit d'équilibrage permettant d'annuler le signal de sortie du circuit d'émission en l'absence d'émission par le poste d'abonné, la résistance (23) du circuit de réglage d'impédance ayant une valeur R3 donnée par l'équation:

$$R3=\frac{1}{n}\,.\,K\,.\,R4\,.\,\frac{R}{Ro-R};$$

et la résistance (28) du circuit d'équilibrage ayant une valeur R6 donnée par l'équation:

$$R6=2n\,.\,R7\,.\,\frac{Ro}{R}\,.\,\frac{1}{K}\,.\,\frac{R5}{R4};$$

équations dans lesquelles K est le facteur de proportionnalité du circuit de mesure (4), 1/n est le rapport de transformation du transformateur, R4 est la valeur de la deuxième résistance (29), R5 est la valeur de la première résistance (27), R7 est la valeur de la quatrième résistance (25), Ro est la valeur de la résistance de ligne et du poste d'abonné, et R est la valeur de la somme des deux résistances (14, 15) des premier et second circuits.

**Patentansprüch**

Vorrichtung zum Speisen einer Teilnehmerstation, die einen galvanischen Trenntransformator (T), der ein Transformationsverhältnis von 1/n hat, einen Meßschaltkreis (4) für den Strom (I) in der Teilnehmerleitung, einen Empfangsschaltkreis (7) für die für die Teilnehmerstation bestimmten Wortsignale, der eingangsseitig mit einer Empfangsklemme (10) und ausgangsseitig mit einem Ende einer Primärwicklung des Transformators verbunden ist, von der ein anderes Ende an ein festes Potential angeschlossen ist, und einen Sendeschaltkreis (9) für die von der Teilnehmerstation kommenden Wortsignale aufweist, der am Ausgang an eine Sendeklemme (11) angeschlossen ist, wobei der Transformator eine Sekundärwicklung aufweist, die aus zwei halben Sekundärwicklungen (E1, E2) besteht, und jede halbe Sekundärwicklung in Serie mit einem Widerstand (14, 15) geschaltet ist und je einen ersten und einen zweiten Schaltkreis bildet, wobei der erste Schaltkreis mit einer Polarität einer Gleichstromquelle und einem Draht der Teilnehmerleitung und der zweite Schaltkreis mit der anderen Polarität dieser Gleichstromquelle und dem anderen Draht der Teilnehmerleitung verbunden ist, wobei der Meßschaltkreis (4) am Eingang mit den Klemmen des Widerstands jeder der ersten und zweiten Schaltkreise verbunden ist und in Bezug auf das feste Potential eine Spannung (V1) liefert, die proportional zu der Summe der Spannungen an den Klemmen der Widerstände des ersten und zweiten Schaltkreises ist, dadurch gekennzeichnet, daß der Empfangsschaltkreis ein erster Addierer (24) ist, dessen positiver Eingang auf dem festen Potential liegt und dessen negativer Eingang mit der Empfangsklemme (10) über einen ersten Widerstand (27), mit dem Ausgang des ersten Addierers über einen zweiten Widerstand (29) und mit dem Ausgang des Meßschaltkreises (4) über einen Impedanzregelkreis (6) und einen Kondensator (C) in Serie verbunden ist, wobei der Impendanzregelkreis aus einem Widerstand (23) besteht und es ermöglicht, die Impedanz der Speisevorrichtung der in der Leitung und der Teilnehmerstation vorhandenen Impedanz anzugleichen, daß der Sendeschaltkreis (9) aus einem zweiten Addierer (26) besteht, dessen positiver Eingang an dem festen Potential liegt und dessen negativer Eingang mit dem Ausgang des zweiten Addierers über einen dritten Widerstand (30), mit einem dem Kondensator (C1) und dem Impedanzregelkreis (6) gemeinsamen Punkt über einen vierten Widerstand (25) und mit der Empfangsklemme (10) über einen aus einem Widerstand (28) bestehenden Ausgleichsschaltkreis (8) verbunden ist, wobei der Ausgleichsschaltkreis es ermöglicht, das Ausgangssignal des Sendeschaltkreises, solange nicht gesendet wird, durch die Teilnehmerstation zu annulieren, und wobei der Widerstand (23) des Impedanzregelkreises einen Wert R3, gegeben durch die Gleichung

$$R3=\frac{1}{n}\,.\,K\,.\,R4\,.\,\frac{R}{Ro-R};$$

hat und der Widerstand (28) des Ausgleichsschaltkreises einen Wert R6, gegeben durch die Gleichung

$$R6=2n \cdot R7 \cdot \frac{Ro}{R} \cdot \frac{1}{K} \cdot \frac{R5}{R4};$$

hat, wobei in diesen Gleichungen K der Proportionalitätsfaktor des Meßschaltkreises (4), 1/n das Transformationsverhältnis des Transformators, R4 der Wert des zweiten Widerstands (29) R5 der Wert des ersten Widerstands (27), R7 der Wert des vierten Widerstands (25), Ro der Wert des Widerstands der Leitung und der Teilnehmerstation und R der Wert der Summe der beiden Widerstände (14, 15) des ersten und zweiten Schaltkreises ist.

**Claim**

A device for feeding a subscriber set comprising a galvanic isolation transformer (T) having a transformation ratio of 1/n, a measuring circuit (4) of the current (I) in the subscriber line, a reception circuit (7) of voice signals destined for the subscriber set, the input of this circuit being connected to a receive terminal (10), and its output being connected to one end of a primary winding of the transformer, another end of which is connected to a fixed potential, and an emission circuit (9) of voice signals coming from the subscriber set, the output of this circuit being connected to an emission terminal (11), the transformer having a secondary winding constituted by two secondary half-windings (E1, E2), each secondary half-winding being in series with a resistor (14, 15) and constituting respectively a first and a second circuit, the first circuit being connected to a polarity of a DC source and to a wire of the subscriber line, the second circuit being connected to the other polarity of said DC source and to the other wire of the subscriber line, the input of the measuring circuit (4) being connected to the terminals of the resistor of each of said first and second circuits and delivering with regard to said fixed potential a voltage (V1) which is proportional to the sum of the voltages at the terminals of the resistors of the first and second circuit, characterized in that the reception circuit is a first adder (24) having a positive input connected to said fixed potential, and a negative input connected to the receive terminal (10) by a first resistor (27), to the output of the first adder by a second resistor (29) and to the output of the measuring circuit (4) by an impedance adjusting circuit (6) and a capacitor (C1) in series, the impedance adjusting circuit being constituted by a resistor (23) and permitting to adapt the impedance of the feeding device to the impedance presented by the line and the subscriber set, that the emission circuit (9) is constituted by a second adder (26) having a positive input connected to the fixed potential and a negative input connected to the output of the second adder by a third resistor (30), to a point common to the capacitor (C1) and to the impedance adjusting circuit (6) by a fourth resistor (25) and to the receive terminal (10) by a balance circuit (8) constituted by a resistor (28), the balance circuit permitting to annul the output signal of the emission circuit as long as there is no emission by the subscriber set, the resistor (23) of the impedance adjusting circuit having a value R3 given by the equation:

$$R3=\frac{1}{n} \cdot K \cdot R4 \cdot \frac{R}{Ro-R}$$

and the resistor (28) of the balance circuit having a value R6 given by the equation:

$$R6=2n \cdot R7 \cdot \frac{Ro}{R} \cdot \frac{1}{K} \cdot \frac{R5}{R4}$$

whereby K is the proportionality factor of the measuring circuit (4), 1/n is the transformation ratio of the transformer, R4 is the value of the second resistor (29), R5 is the value of the first resistor (27), R7 is the value of the fourth resistor (25), Ro is the value of the line resistance and the subscriber set resistance and R is the value of the sum of the two resistors (14, 15) of the first and second circuits.

FIG.1

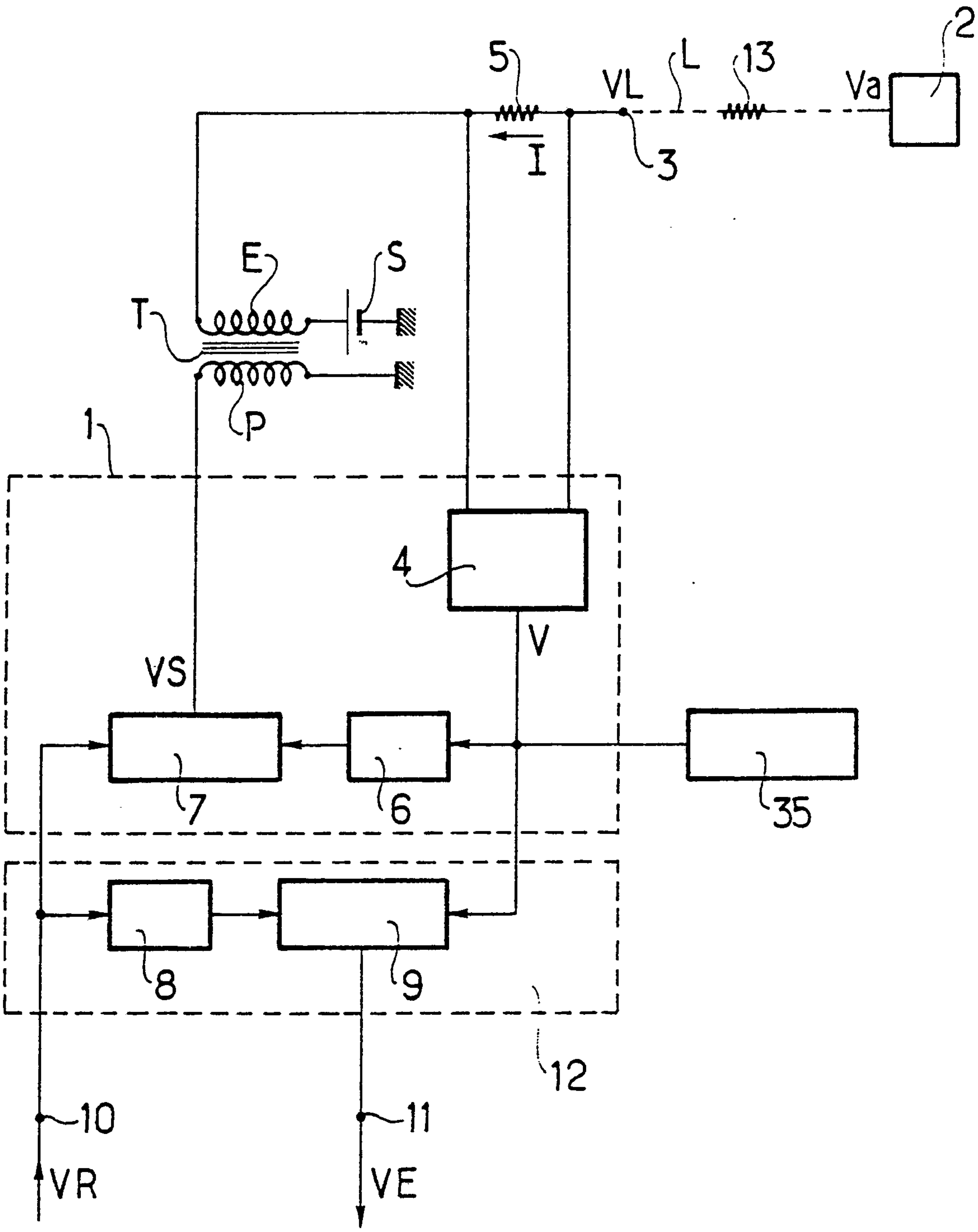

FIG. 2

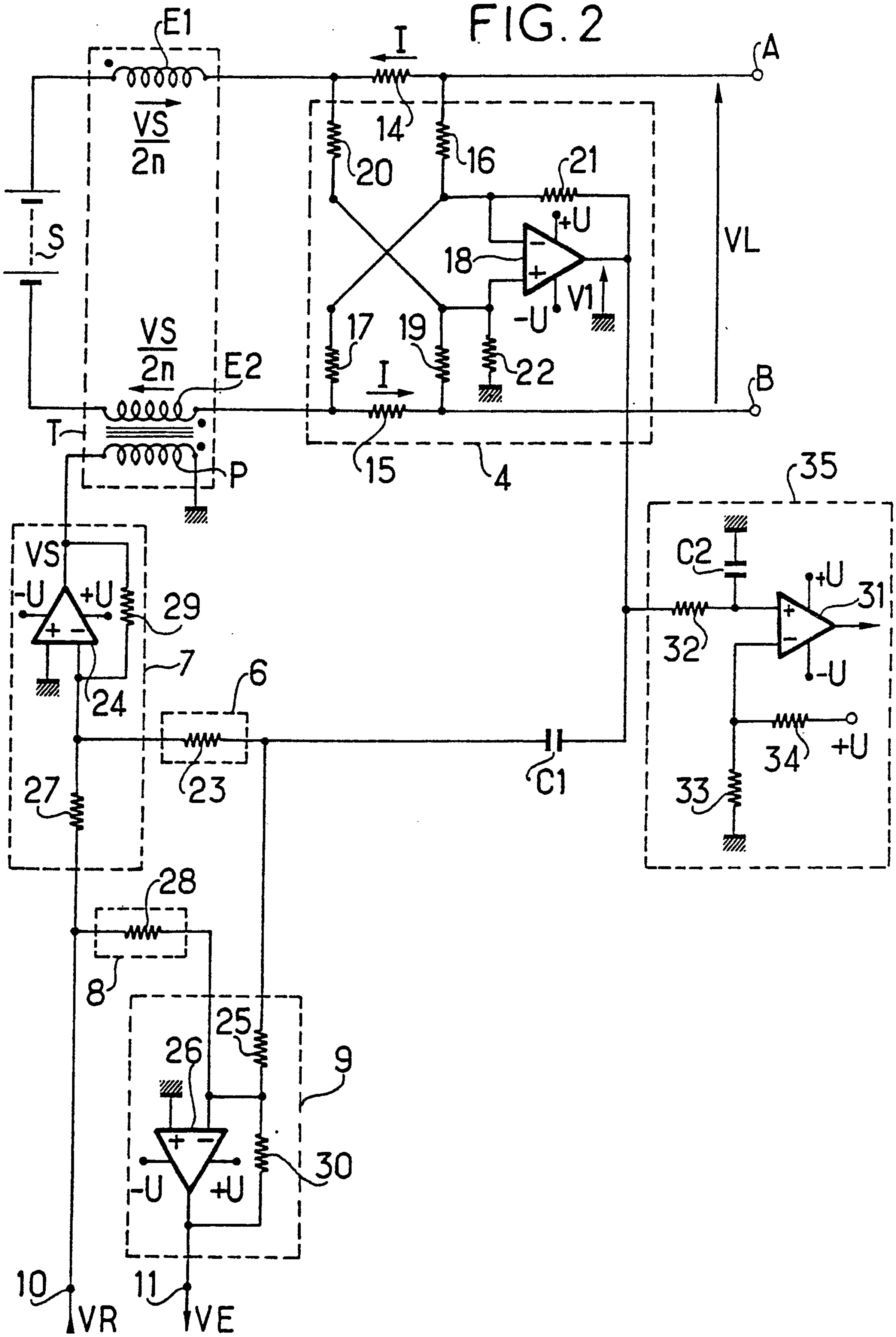
E1
I
A
VS
2n
14
16
20
21
+U
S
18
VL
V1
-U
17
19
VS
2n
E2
22
I
B
T
15
4
P
35
C2
+U
31
VS
-U
+U
29
32
-U
7
24
6
34
+U
27
23
C1
33
28
8
25
26
9
30
-U
+U
10
11
VR
VE